# EUROPEAN PATENT APPLICATION

(11) **EP 4 742 616 A1**
(43) Date of publication of application: **13.05.2026**
(21) Application number: 25210708.1
(22) Date of filing: 23.10.2025
(51) Int. Cl.: H04L 45/00, H04L 12/46, H04L 45/28, H04W 40/02

(54) **DISTRIBUTED NETWORK SYSTEM, CONTROLLING METHOD AND COMPUTER PROGRAM PRODUCT**

(30) Priority: 07.11.2024 US 202418939817
(71) Applicant: TP-Link Systems Inc., Irvine, California 92618 (US)
(72) Inventor: QIU, Xinyao, Shenzhen, 518000 (CN)
(74) Representative: Marks & Clerk LLP

(57) **Abstract**

This disclosure provides a distributed network system, a controlling method for a primary network device, and corresponding computer program product. The distributed network system may include a primary network device connected to an external node through a first access component; and one or more secondary network devices separated from the primary network device, wherein each secondary network device is connectable to the external node through a second access component different from the first access component, wherein at least one backhaul link is established between the primary network device and each secondary network device, and wherein each secondary network device is configured to route data streams from a terminal and destined for the external node to the primary network device through the at least one backhaul link.

## Description

### CROSS-REFERENCE TO RELATED APPLICATION

This Patent application claims priority of the U.S. Patent Application No. 18/939,817, filed on November 7, 2024, and titled "DISTRIBUTED NETWORK SYSTEM, CONTROLLING METHOD AND COMPUTER PROGRAM PRODUCT", the disclosure of which is incorporated herein by reference in its entirety as part of the present application.

### TECHNICAL FIELD

The present disclosure relates to the field of local area network, and more specifically, to a distributed network system operating in a local area network, a controlling method for a primary network device operating in a local area network and a computer program product.

### BACKGROUND

CPE (Customer Premise Equipment) refers to a kind of equipment that can convert mobile communication signals or wired broadband signals into local LAN (local area network) signals for user equipment. CPE is usually located at the user end, such as home or enterprise, and plays the role of connecting the user equipment with the network, for example, the Internet.

### SUMMARY

The present disclosure provides techniques for allowing users or terminals to access an external node with higher signal quality. The external node referred to herein may be a wide area network, the Internet, an external server, a website, a web page, a video stream, among other examples. In particular, the present disclosure provides a distributed network system operating in a local area network, a controlling method for a primary network device operating in a local area network and a computer program product. Through the techniques described herein, the distributed network system can be ensured to provide a good access quality and a "transparent switching" of the network devices in the distributed network system can be achieved.

According to an aspect of the present disclosure, there is provided a distributed network system operating in a local area network. The distributed network system can comprise a primary network device connected to an external node through a first access component; and one or more secondary network devices separated from the primary network device. Each secondary network device is connectable to the external node through a second access component different from the first access component. At least one backhaul link is established between the primary network device and each secondary network device. Each secondary network device can be configured to route data streams from a terminal and destined for the external node to the primary network device through the at least one backhaul link.

In some embodiments, the primary network device can be configured to route, data streams destined for the external node, to at least one secondary network device among the one or more secondary network devices through at least one virtual private network (VPN) tunnel between the primary network device and the at least one secondary network device, in response to a failure of a connection of the primary network device to the external node through the first access component. Each of the at least one secondary network device can be configured to route data streams from the primary network device to the external node through its second access component.

In some embodiments, routing data streams destined for the external node to at least one secondary network device among the one or more secondary network devices through at least one VPN tunnel between the primary network device and the at least one secondary network device can comprises: selecting the at least one secondary network device from the one or more secondary network devices based on network characteristics of the one or more secondary network devices; assigning the data streams among the at least one secondary network device; and routing the data streams to the at least one secondary network device according to the assigning through the at least one VPN tunnel.

In some embodiments, the network characteristics of a secondary network device can comprise at least one of a signal strength, a packet loss, latency and bandwidth of the secondary network device.

In some embodiments, selecting the at least one secondary network device from the one or more secondary network devices can be further based on characteristics of the data streams.

In some embodiments, characteristics of a data stream can comprise at least one of a latency sensitivity, a bandwidth requirement and a packet loss rate requirement of the data stream.

In some embodiments, a VPN tunnel can be established between the primary network device and each secondary network device in response to the failure of the connection of the primary network device to the external node.

In some embodiments, the at least one secondary network device can be configured to route data streams from the external node to the primary network device through the at least one VPN channel.

In some embodiments, the primary network device can be configured to route, data streams destined for a terminal connected to a first secondary network device among the one or more secondary network devices, to the first secondary network device through the at least one backhaul link between the primary network device and the first secondary network device.

In some embodiments, each secondary network device can connect to the external node through the second access component in response to determining a failure of a connection of the primary network device to the external node through the first access component.

In some embodiments, the first access component comprises a wired access component or a wireless access component.

In some embodiments, the second access component can comprise at least one of a cellular network access component, a Wireless Local Area Network (WLAN) access component or a wired access component.

In some embodiments, a VPN tunnel between the primary network device and each secondary network device can be established based on a point to point tunneling protocol (PPTP), a layer 2 tunneling protocol (L2TP), a generic routing encapsulation (GRE) tunneling protocol, a WireGuard protocol or an OpenVPN protocol.

In some embodiments, the at least one backhaul link can comprise at least one of an Ethernet backhaul link, a Wi-Fi backhaul link and a power line communication (PLC) backhaul link.

According to another aspect of the present disclosure, there is provided a controlling method for a primary network device operating in a local area network. The controlling method can comprise: routing, data streams destined for an external node, to the external node through a first access component, in response to a success of a connection of the primary network device to the external node through the first access component; and routing, the data streams destined for the external node, to at least one secondary network device among one or more secondary network devices, in response to a failure of the connection of the primary network device to the external node through the first access component. The one or more secondary network devices can be separated from the primary network device, and each secondary network device is connectable to the external node through a second access component different from the first access component.

In some embodiments, the routing the data streams destined for the external node to at least one secondary network device among one or more secondary network devices comprises the routing the data streams to the at least one secondary network device through at least one virtual private network (VPN) tunnel between the primary network device and the at least one secondary network device.

In some embodiments, each secondary network device can be configured to route data streams from a terminal and destined for the external node to the primary network device through at least one backhaul link established between the primary network device and the secondary network device.

In some embodiments, each of the at least one secondary network device can be configured to route data streams from the primary network device to the external node through its second access component.

In some embodiments, routing the data streams to the at least one secondary network device through the at least one VPN tunnel comprises: selecting the at least one secondary network device from the one or more secondary network devices based on network characteristics of the one or more secondary network devices; assigning the data streams among the at least one secondary network device; and routing the data streams to the at least one secondary network device according to the assigning through the at least one VPN tunnel.

In some embodiments, selecting the at least one secondary network device from the one or more secondary network devices can be further based on characteristics of the data streams.

In some embodiments, network characteristics of a secondary network device can comprise at least one of a signal strength, a packet loss, latency and bandwidth of the secondary network device, and characteristics of a data stream can comprise at least one of a latency sensitivity, a bandwidth requirement and a packet loss rate requirement of the data stream.

According to yet another aspect of the present disclosure, there is provided a computer program product for a primary network device operating in a local area network. The computer program product can comprise a non-transitory computer readable storage medium having program instructions embodied therewith. The program instructions are executable by a processor of the primary network device to cause the processor to: route, data streams destined for an external node, to the external node through a first access component, in response to a success of a connection of the primary network device to the external node through the first access component; and route, the data streams destined for the external node, to at least one secondary network device among one or more secondary network devices through at least one virtual private network (VPN) tunnel between the primary network device and the at least one secondary network device, in response to a failure of the connection of the primary network device to the external node through the first access component. The one or more secondary network devices can be separated from the primary network device, and each secondary network device is connectable to the external node through a second access component different from the first access component.

At least based on the above embodiments of the present disclosure, positions of the secondary network devices can be flexibly adjusted to ensure that the distributed network system operating in the local area network provides a good access quality. In addition, the one or more secondary network devices always route data streams from terminals to the primary network device through the backhaul links. In this way, even if a switching from the primary network device to at least one of the one or more secondary network devices occurs, the user or terminals connected to the primary network device and the one or more secondary network devices will not be affected and thus a "transparent switching" of the network devices can be achieved, so that users will not perceive any interruptions or changes during the switching.

### BRIEF DESCRIPTION OF DRAWINGS

The above and other objects, features and advantages of the present disclosure will become more apparent by describing embodiments of the present disclosure in more detail in conjunction with accompanying drawings. The drawings are used to provide a further understanding of the embodiments of the present disclosure and constitute a part of the specification. The drawings together with the embodiments of the present disclosure are used to explain the present disclosure, but do not constitute a limitation on the present disclosure. In the drawings, unless otherwise explicitly indicated, the same reference numerals refer to the same components, steps or elements.
Fig. 1 illustrates a schematic diagram of a distributed network system according to an embodiment of the present disclosure;
Fig. 2 illustrates a flow of data streams from terminals to an external node when the primary network device is connected to the external node according to an embodiment of the present disclosure;
Fig. 3 illustrates a schematic diagram of VPN channels between the primary network device and the one or more secondary network devices according to an embodiment of the present disclosure;
Fig. 4 illustrates a flow of data streams from terminals to an external node when the primary network device fails to connect to the external node according to an embodiment of the present disclosure;
Fig. 5 illustrates steps for routing data streams from the primary network device to the at least one secondary network device according to an embodiment of the present disclosure;
Fig. 6 illustrates a flowchart of a controlling method for a primary network device operating in a local area network according to an embodiment of the present disclosure;
Fig. 7 is an exemplary block diagram illustrating a device according to an embodiment of the present disclosure.

### DETAILED DESCRIPTION

The technical solution of the present disclosure will be clearly and completely described below in conjunction with accompanying drawings. Obviously, the described embodiments are part of embodiments of the present disclosure, but not all of them. Based on the embodiments in the present disclosure, all other embodiments obtained by ordinary skilled in the art without making any creative efforts fall within the scope of protection of the present disclosure.

In the description of the present disclosure, it should be noted that terms such as "first", "second" and "third" are only for descriptive purposes, whereas cannot be understood as indicating or implying relative importance. Likewise, words like "a", "an" or "the" do not represent a quantity limit, but represent an existence of at least one. Words like "include" or "comprise" mean that an element or an object in front of said word encompasses those ones listed following the said word and their equivalents, without excluding other elements or objects.

In addition, technical features involved in different embodiments of the present disclosure described below may be combined with each other as long as no conflicts occur therebetween.

At described above, CPE can be provided at home or enterprise, and plays the role of connecting user equipment such as smartphones, laptops, desktop computers and smart home devices with the network, for example, the Internet. The CPE may include multiple gateways. For example, the CPE may include a wired access gateway, which is usually used for wired broadband connection, such as DSL (Digital Subscriber Line), FTTH (Fiber to the Home) and so on. It converts wired signals into Wi-Fi signals or provide wired connections through Ethernet ports for user equipment. The CPE may also include a wireless access gateway, which can receive wireless signals (such as 3G, 4G, 5G and other mobile communication signals) and convert them into Wi-Fi or Ethernet connections.

At described above, multiple gateways can be distributed on the same CPE. However, wired access gateways with for example DSL/PON (Passive Optical Network) broadband access are often located in the center of the home or located in a fixed position at home. Due to the isolation of walls, doors and windows or geographical positions, the signal quality of the wireless access gateways with for example 3G/4G/ 5G access and distributed on the same CPE as the wired access gateways is often worse than that in the open environment. Therefore, the access quality and deployment flexibility of the CPE needs to be improved.

In view of the above problems, the present disclosure provides a distributed network system operating in a local area network, a controlling method for a primary network device operating in a local area network and a computer program product. Through the techniques described herein, a primary network device and one or more secondary network devices associated with different communication networks can be distributed at different positions and communicate through backhaul links. In this way, positions of the secondary network devices can be flexibly adjusted to ensure that the distributed network system operating in the local area network provides a good access quality. In addition, the one or more secondary network devices always route data streams from terminals to the primary network device through the backhaul links. In this way, even if a switching from the primary network device to at least one of the one or more secondary network devices occurs, the user or terminals connected to the primary network device and the one or more secondary network devices will not be affected and thus a "transparent switching" of the network devices can be achieved, so that users will not perceive any interruptions or changes during the switching.

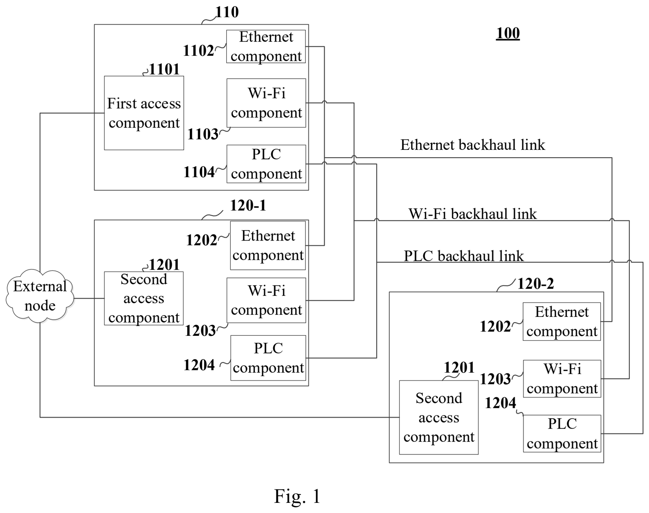

The following descriptions will be made with reference to Fig. 1. It is shown a schematic diagram of a distributed network system 100 operating in a LAN (local area network) according to an embodiment of the present disclosure. As shown in Fig. 1, the distributed network system 100 can comprise a primary network device 110 and one or more secondary network devices 120. It should be appreciated that although the one or more secondary network devices 120 are shown in Fig. 1 as two secondary network devices 120-1 and 120-2, the number of the one or more secondary network devices 120 are not limited to two, but can also be one or more than two.

The primary network device 110 can be connected to an external node. The external node referred to herein may be a wide area network, the Internet, an external server, a website, a web page, a video stream, among other examples. The primary network device 110 may comprise a first access component 1101, so as to connect to the external node through the first access component 1101. In some embodiments, the first access component 1101 may be or include a wired access component so that a stable connection can be established with the external node through the first access component 1101. In this case, the first access component 1101 may support various wired broadband access technologies, such as DSL (Digital Subscriber Line), PON (Passive Optical Network) and EWAN (Ethernet Wide Area Network), and therefore can establish a wired broadband connection with the external node. In some embodiments, the primary network device 110 may be a gateway, and the first access component 1101 may be a DSL modem, an ONU (Optical Network Unit), or an Ethernet interface card, among other examples. In some embodiments, the first access component 1101 may include a wireless access component and may support various wireless broadband access technologies. For example, the first access component 1101 may be or include a cellular network access component or a Wireless Local Area Network (WLAN) access component. For example, the cellular network access component may be a 3G (Third Generation)/4G (Fourth Generation)/5G (Fifth Generation) communication module or unit, which can establish a wireless connection with a base station and in turn a connection with the external node. In this case, the position of the primary network device 110 can be flexible.

The one or more secondary network devices 120 are connectable to the external node. Each secondary network device 120 may comprise a second access component 1201, so as to connect to the external node through the second access component 1201. The second access component 1201 may support various wired broadband access technologies and/or wireless broadband access technologies, and therefore can establish a wired broadband connection or a wireless broadband connection with the external node. In some embodiments, the second access component 1201 may comprise at least one of a cellular network access component, a Wireless Local Area Network (WLAN) access component or a wired access component. For example, the cellular network access component may be a 3G (Third Generation)/4G (Fourth Generation)/5G (Fifth Generation) communication module or unit, which can establish a wireless connection with a base station and in turn a connection with the external node. The wired access component may support various wired broadband access technologies, and therefore establish a wired broadband connection with the external node. However, the second access component may be different from the first access component. For example, the first and the second access components may both be wired access components, but support network communication provided by different communication providers or operators. For another example, the first access component may be a wired access component while the second access component may be a wireless access component. In this way, more diversified network access can be obtained by the distributed network system 100.

The one or more secondary network devices 120 may not be continuously connected to the external node as the primary network device 110. In some embodiments, each secondary network device 120 may connect to the external node through the second access component 1201 in response to determining a failure of a connection of the primary network device 110 to the external node through the first access component 1101. That is, the secondary network device 120 connects to the external node through its second access component 1201 if it is determined that the primary network device 110 fails to connect to the external node through its first access component 1101. In this way, the power and resources for the one or more secondary network devices 120 to keep the connection with the external node may be saved.

The one or more secondary network devices 120 are separated from the primary network device 110 in terms of positions. For example, the primary network device 110 may be located at the center of home or office, while the one or more secondary network devices 120 may be located on balconies or windowsills. Positions of the secondary network devices are relatively flexible as compared to the primary network device and can be adjusted, ensuring that the distributed network system 100 operating in the LAN to provide a connection to the external node with a good access quality through either the primary network device 110 or at least one of the one or more secondary network devices 120.

As can be seen from Fig. 1, the primary network device 110 may comprise at least one of an Ethernet component 1102, a Wi-Fi component 1103 and a PLC (Power Line Communication) component 1104. Correspondingly, each of the one or more secondary network devices 120 may comprise at least one of an Ethernet component 1202, a Wi-Fi component 1203 and a PLC component 1204. In this way, at least one backhaul link can be established between the primary network device 110 and each secondary network device 120. For example, if the primary network device 110 comprises the Ethernet component 1102 and the secondary network device 120-1 comprises the Ethernet component 1202, an Ethernet backhaul link can be established between the primary network device 110 and the secondary network device 120-1. Similarly, if the primary network device 110 comprises the Wi-Fi component 1103 and the PLC component 1104, and the secondary network device 120-2 comprises the Wi-Fi component 1203 and the PLC component 1204, a Wi-Fi backhaul link and a PLC backhaul link can be established between the primary network device 110 and the secondary network device 120-2. In this way, at least one backhaul link can be established between the primary network device 110 and each secondary network device 120.

In some embodiments, the at least one backhaul link may support transmission in one frequency band or multiple frequency bands, which means that the at least one backhaul link may support transmission in a single band such as one of 2.4GHz, 5GHz and future 6GHz frequency bands and the like, or support transmission in more than one frequency band, such as in both the 2.4GHz and 5GHz frequency bands, both the 5GHz and 6GHz frequency bands, or at least two of the 2.4GHz, 5GHz and 6GHz frequency bands and the like. In some embodiments, the at least one backhaul link may support MLO (Multi-Link Operation), which has been introduced and significantly enhanced in the Wi-Fi 7 standard and allows devices to use multiple wireless frequency bands at the same time.

There may be terminals in the LAN that the distributed network system 100 is operating in. A terminal may connect to the primary network device 110 through a wireless LAN connection or a wired LAN connection, so as to connect to the external node via the primary network device 110. Therefore, the primary network device 110 may receive data streams from a terminal and destined for the external node. Similarly, a terminal may connect to a secondary network device 120 through a wireless LAN connection or a wired LAN connection, so as to connect to the external node via the secondary network device 120. Therefore, each secondary network device 120 may receive data streams from a terminal and destined for the external node. Each secondary network device 120 can be configured to route data streams from a terminal and destined for the external node to the primary network device 110 through the at least one backhaul link. That is, each secondary network device 120 always routes, data streams from terminals, to the primary network device 110 through the at least one backhaul link regardless of whether the secondary network device 120 itself is connected to the external node or not and regardless of whether the primary network device 110 is connected to the external node or not, ensuring stability of the network topology. As a result, data streams from terminals, whether connected to the primary network device 110 or the one or more secondary network devices 120, are always gathered at the primary network device 110. In this way, even if a switching from the primary network device 110 to at least one of the one or more secondary network devices 120 occurs, the terminals connected to the primary network device 110 and the one or more secondary network devices 120 will not be affected, and thus a "transparent switching" of the network devices can be achieved, so that the terminals or users of the terminals will not perceive any interruptions or changes during the switching.

As described above, the primary network device 110 can be connected to the external node, and therefore, the data streams gathered at the primary network device 110 and destined for the external node, either from terminals connected to the primary network device 110 or from terminals connected to any one of the one or more secondary network devices 120), can be routed to the external node by the primary network device 110 through the first access component 1101.

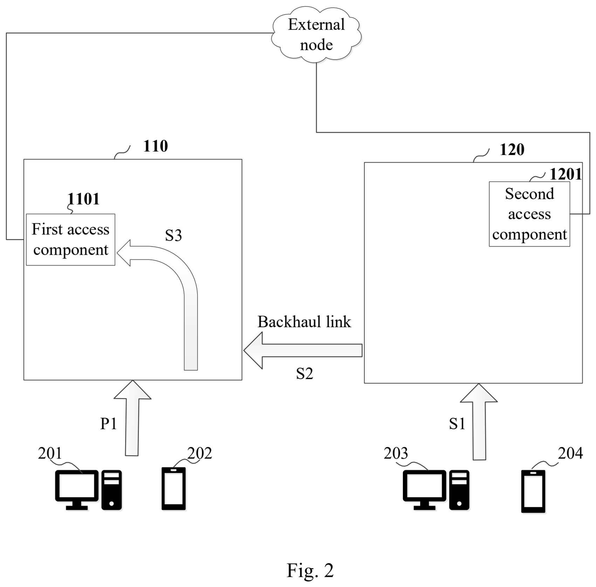

Fig. 2 illustrates a flow of data streams from terminals to an external node when the primary network device 110 is connected to the external node according to an embodiment of the present disclosure. As can be seen in Fig. 2, one or more terminals may be connected to the primary network device 110. For example, the desktop computer 201 shown in Fig. 2 may connect to the primary network device 110 through a wired LAN connection, and the cellphone 202 shown in Fig. 2 may connect to the primary network device 110 through a wireless LAN connection. Similarly, one or more terminals may be connected to one or more secondary network devices 120. For example, the desktop computer 203 shown in Fig. 2 may connect to the secondary network device 120 through a wired LAN connection, and the cellphone 204 shown in Fig. 2 may connect to the secondary network device 120 through a wireless LAN connection. Data streams from the terminals connected to the primary network device 110 and destined for the external node may be received at the primary network device 110 through wired and/or wireless LAN connections, shown as P1 in Fig. 2. Similarly, data streams from the terminals connected to the secondary network device 120 and destined for the external node may be received at the secondary network device 120 through wired and/or wireless LAN connections, shown as S1 in Fig. 2. The data streams received at the secondary network device 120 are further routed by the secondary network device 120 to the primary network device 110 through the at least one backhaul link between the primary network device 110 and the secondary network device 120, shown as S2 in Fig. 2. As a result, the data streams from terminals, whether connected to the primary network device 110 or the secondary network device 120, are gathered at the primary network device 110. Then, the data streams gathered at the primary network device 110 can be routed to the first access component 1101 of the primary network device 110, shown as S3 in Fig. 2, for example, by means of NAT (Network Address Translation), so as to be transmitted to the external node via the wired or wireless broadband connection of the first access component 1101 with the external node. In this way, if the primary network device 110 is successfully connected to the external node, data streams, from terminals connected to the primary network device 110 or the one or more secondary network devices 120 and destined for the external node, are all transmitted to the external node via the primary network device 110, regardless of whether the secondary network device 120 itself is connected to the external node or not.

It should be appreciated that the terminals are exemplarily shown in Fig. 2 as desktop computers and cellphones, but the terminals are not limited thereto, and they can also be laptops, set-top boxes, smart cameras and the like. It should also be appreciated that although the number of the secondary network device 120 is shown as one in Fig. 2, there may be two or more secondary network devices 120.

The connection to the external node through the first access component 1101 may fail due to various reasons such as hardware faults, software conflicts or firmware bugs. Therefore, the data streams gathered at the primary network device 110 may not be transmitted to the external node successfully. In order to transmit the data streams to the external node and considering that the one or more secondary network devices 120 may be able to connect to the external node successfully, in some embodiments, the primary network device 110 can be configured to route data streams destined for the external node to at least one secondary network device (for example, 120-1 as shown in Fig. 1) among the one or more secondary network devices (for example, 120-1 and 120-2 as shown in Fig. 1) through at least one VPN tunnel between the primary network device 110 and the at least one secondary network device (for example, 120-1 as shown in Fig. 1), in response to a failure of a connection of the primary network device 110 to the external node through the first access component 1101. Correspondingly, each of the at least one secondary network device (for example, 120-1 as shown in Fig. 1) can be configured to route data streams from the primary network device 110 to the external node through its second access component 1201. As described above, each secondary network device 120 may connect to the external node through the second access component 1201 in response to determining a failure of a connection of the primary network device 110 to the external node through the first access component 1101 so as to save power and resources. As an alternative, each secondary network device 120 may connect to the external node through the second access component 1201 continuously to ensure real-time data stream transmission.

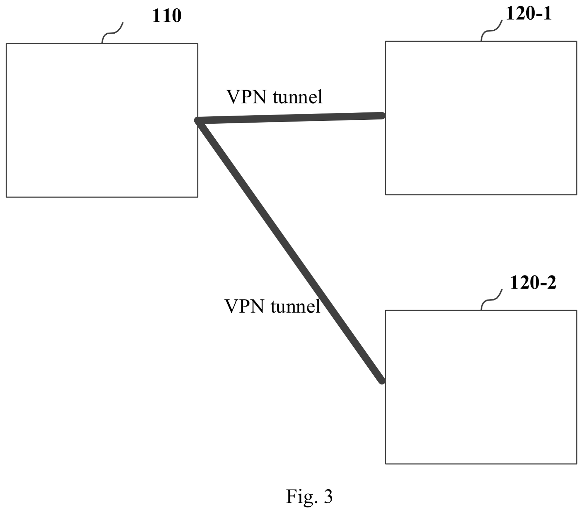

Fig. 3 illustrates a schematic diagram of VPN channels between the primary network device 110 and the one or more secondary network devices 120 according to an embodiment of the present disclosure. One VPN channel can be established between the primary network device 110 and each secondary network device 120. As can be seen from Fig. 3, one VPN channel can be established between the primary network device 110 and the secondary network device 120-1, and one VPN channel can be established between the primary network device 110 and the secondary network device 120-2.

In some embodiments, the VPN tunnel can be established between the primary network device 110 and each secondary network device 120 in response to the failure of the connection of the primary network device 110 to the external node, so that the VPN tunnel can be established as needed, and there is no need to continuously occupy network resources and bandwidth, which improves flexibility. In some embodiments, the VPN tunnel can be established between the primary network device 110 and each secondary network device 120 in advance, so that it is available at any time, and thus reducing delay. In some embodiments, the VPN tunnel between the primary network device 110 and each secondary network device 120 can be established based on various protocols for VPN tunnels, such as a point to point tunneling protocol (PPTP), a layer 2 tunneling protocol (L2TP), a generic routing encapsulation (GRE) tunneling protocol, a WireGuard protocol or an OpenVPN protocol.

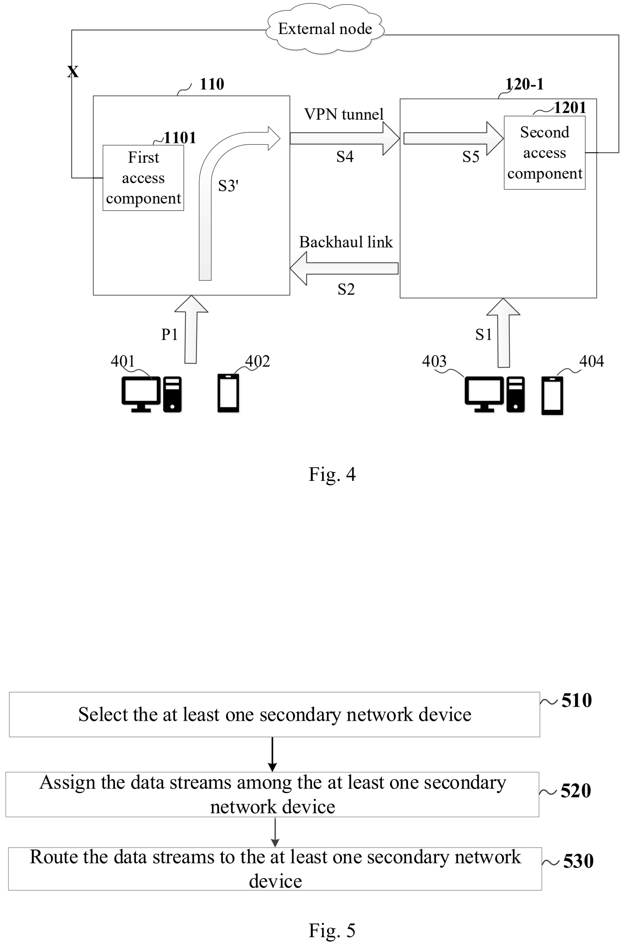

Fig. 4 illustrates a flow of data streams from terminals to an external node when the primary network device 110 fails to connect to the external node according to an embodiment of the present disclosure. As can be seen in Fig. 4, one or more terminals may be connected to the primary network device 110. For example, the desktop computer 401 shown in Fig. 4 may connect to the primary network device 110 through a wired LAN connection, and the cellphone 402 shown in Fig. 4 may connect to the primary network device 110 through a wireless LAN connection. Similarly, one or more terminals may be connected to one or more secondary network devices 120. For example, the desktop computer 403 shown in Fig. 4 may connect to the secondary network device 120-1 through a wired LAN connection, and the cellphone 404 shown in Fig. 4 may connect to the secondary network device 120-1 through a wireless LAN connection. Data streams from the terminals connected to the primary network device 110 and destined for the external node may be received at the primary network device 110 through wired and/or wireless LAN connections, shown as P1 in Fig. 4. Similarly, data streams from the terminals connected to the secondary network device 120-1 and destined for the external node may be received at the secondary network device 120-1 through wired and/or wireless LAN connections, shown as S1 in Fig. 4. The data streams received at the secondary network device 120-1 are further routed by the secondary network device 120-1 to the primary network device 110 through the at least one backhaul link between the primary network device 110 and the secondary network device 120-1, shown as S2 in Fig. 4. As a result, the data streams from terminals, whether connected to the primary network device 110 or the secondary network device 120-1, are gathered at the primary network device 110. In this diagram shown in Fig. 4, the secondary network device 120-1 is assumed to be an example of the at least one secondary network device among the one or more secondary network devices to route the data streams to the external node in case the primary network device 110 fails to connect to the external node. Then, different from the flow of data streams shown as S3 in Fig. 2, in response to a failure of the connection of the primary network device 110 to the external node through the first access component 1101, the data streams gathered at the primary network device 110 can be routed to the VPN tunnel between the primary network device 110 and the secondary network device 120-1, shown as S3' in Fig. 4, for example, by means of NAT. The data streams can be transmitted from the primary network device 110 to the secondary network device 120-1 via the VPN tunnel, shown as S4 in Fig. 4, and then routed to the second access component 1201, shown as S5 in Fig.4, so as to be routed to the external node via the wired broadband connection or the wireless broadband connection of the second access component 1201 with the external node. In this way, if the primary network device 110 fails to connect to the external node, then data streams, from terminals connected to the primary network device 110 or the one or more secondary network devices 120 and destined for the external node, are still firstly gathered at the primary network device 110, and then routed to at least one secondary network device (shown as 120-1 in Fig. 4) among the one or more secondary network devices 120, so as to be routed to the external node via the at least one secondary network device.

Since the data streams from terminals are always firstly gathered at the primary network device 110 regardless of whether the secondary network device 120 itself is connected to the external node or not and regardless of whether the primary network device 110 is connected to the external node or not, stability of the network topology can be ensured. Even if the actual device to transmit the data streams to the external node changes from the primary network device 110 to the at least one secondary network device 120, the DNS (Domain Name System) settings for the terminals need not to change, and there is no redistribution of IP/MAC layer addresses involved. In addition, as can be seen from Fig. 4, as the data streams from the terminals connected to any one of the one or more secondary network devices 120 are routed to the primary network device 110 through the corresponding at least one backhaul link, shown as S2 in Fig. 4, i.e., transmitted on layer 2, while the data streams from the primary network device 110 are routed to the at least one secondary network device 120 through at least one VPN tunnel (with one VPN channel corresponding to one secondary network device of the at least one secondary network device), shown as S4 in Fig. 4, i.e., transmitted on layer 3, there will be no conflict and confusion between data streams transmitted in the 2 different directions.

It should be appreciated that the terminals are exemplarily shown in Fig. 4 as desktop computers and cellphones, but the terminals are not limited thereto, and they can also be laptops, set-top boxes, smart cameras and the like. It should also be appreciated that although the number of the at least one secondary network device 120 is shown as one in Fig. 4, there may be two or more secondary network devices 120 that are functioning as the at least one secondary network device 120.

In some embodiments, the above-mentioned routing data streams destined for the external node to the at least one secondary network device through the at least one VPN tunnel between the primary network device and the at least one secondary network device by the primary network device 110 may include the following 3 steps shown in Fig. 5.

Fig. 5 illustrates steps for routing data streams from the primary network device to the at least one secondary network device according to an embodiment of the present disclosure. As shown in Fig. 5, in a first step 510, the at least one secondary network device can be selected from the one or more secondary network devices, and the selecting can be based on network characteristics of the one or more secondary network devices. In this way, at least one secondary network device with optimal network characteristics can be selected to route the data streams to the external node. The number of the at least one secondary network device can be predetermined or set as required. In some embodiments, the network characteristics of a secondary network device mentioned herein may include at least one of a signal strength, a packet loss, latency and bandwidth of the secondary network device.

In a second step 520, the data streams can be assigned among the at least one secondary network device. For example, the data streams can be assigned among the at least one secondary network device based on a predetermined ratio. As a specific example, the number of the at least one secondary network device may be 3, and the predetermined ratio may be set as 50%, 30% and 20%, then 50% of the data streams can be assigned to a first secondary network device with the best network characteristics among the 3 secondary network devices, 30% of the data streams can be allocated to a second secondary network device with the second best network characteristics among the 3 secondary network devices, and 30% of the data streams can be allocated to a third secondary network device with the third best network characteristics among the 3 secondary network devices.

In a third step 530, the data streams can be routed to the at least one secondary network device according to the assigning at the second step through the at least one VPN tunnel. Continuing with the above example, according to the above assigning, 50% of the data streams can be routed from the primary network device to the first secondary network device with the best network characteristics through the VPN tunnel between the primary network device and the first secondary network device, 30% of the data streams can be routed from the primary network device to the second secondary network device with the second best network characteristics through the VPN tunnel between the primary network device and the second secondary network device, and 30% of the data streams can be routed from the primary network device to the third secondary network device with the third best network characteristics through the VPN tunnel between the primary network device and the third secondary network device.

In some embodiments, the selecting the at least one secondary network device from the one or more secondary network devices in the above first step 510 can be further based on characteristics of the data streams, in addition to the network characteristics of the one or more secondary network devices. That is, at least one secondary network device with network characteristics that are adapted to the characteristics of the data streams can be selected, so that the communication of data is more efficient and a better user experience can be achieved. In some embodiments, characteristics of a data stream may include at least one of a latency sensitivity, a bandwidth requirement and a packet loss rate requirement of the data stream. As a specific example, a data stream may be related to accessing a webpage, and therefore characteristics of the data stream may include a packet loss rate requirement and a bandwidth requirement, which for example require that web page elements can be loaded correctly and no data is lost, as well as that there is sufficient bandwidth to support rapid download of a large amount of data on web pages. Accordingly, a secondary network device with network characteristics of a low packet loss and high bandwidth may be selected as the at least one secondary network device. As another example, a data stream may be related to an online game, and therefore characteristics of the data stream may include a latency sensitivity and a bandwidth requirement, which for example require that network delay should be low and that there is sufficient bandwidth to transmit high-quality images and video streams. Accordingly, a secondary network device with network characteristics of a strong signal strength, a low latency and high bandwidth may be selected as the at least one secondary network device.

Although the above description is directed to routing of data streams which are from terminals and destined for the external node, it should be appreciated that data streams from an opposite direction, that is, data streams from the external node and destined for the terminals (which are transmitted as a response to the data streams from terminals), may follow the same path. Therefore, in some embodiments, the at least one secondary network device (shown as 120-1 in Fig. 4) can be configured to route data streams from the external node to the primary network device 110 through the at least one VPN channel. One example of this routing is the reverse of S4 in Fig. 4. Similarly, in some embodiments, the primary network device can be configured to route, data streams destined for a terminal connected to a first secondary network device among the one or more secondary network devices, to the first secondary network device through the at least one backhaul link between the primary network device and the first secondary network device. One example of this routing is the reverse of S2 in Fig. 4.

In some embodiments, the primary network device 110 and/ or the one or more secondary network devices 120 may be gateways.

According to embodiments of the present disclosure, positions of the secondary network devices can be flexibly adjusted to ensure that the distributed network system operating in the local area network provides a good access quality. In addition, the one or more secondary network devices always route data streams from terminals to the primary network device through the backhaul links. In this way, even if a switching from the primary network device to at least one of the one or more secondary network devices occurs, the user or terminals connected to the primary network device and the one or more secondary network devices will not be affected and thus a "transparent switching" of the network devices can be achieved, so that users will not perceive any interruptions or changes during the switching.

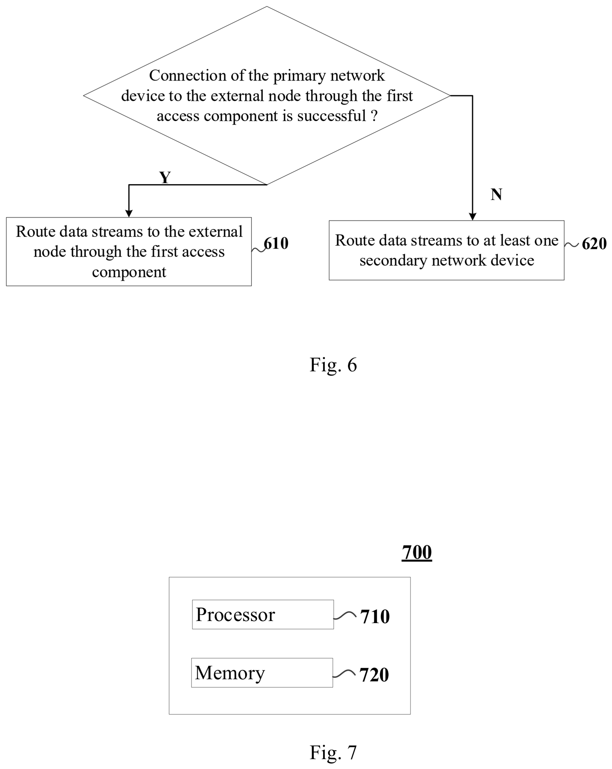

Referring now to Fig. 6, where it is shown a flowchart of a controlling method 600 for a primary network device operating in a local area network according to an embodiment of the present disclosure. The method 600 in Fig. 6 can be performed by the primary network device 110 in the distributed network system 100 of Fig. 1. The following descriptions will be made by referring to Figs. 1-5 and Fig. 6.

As shown in Fig. 6, the method 600 may comprise the following steps. The connection of the primary network device 110 to the external node through the first access component 1101 of the primary network device 110 can be successful or failed, and the primary network device 110 may take different actions accordingly. On the one hand, at step 610, data streams destined for the external node can be routed to the external node through the first access component 1101, in response to a success of the connection of the primary network device 110 to the external node through the first access component 1101. On the other hand, at step 620, data streams destined for the external node can be routed to at least one secondary network device 120-1 among one or more secondary network devices 120, in response to a failure of the connection of the primary network device 110 to the external node through the first access component 1101. The one or more secondary network devices 120 can be separated from the primary network device 110, and each secondary network device 120 is connectable to the external node through a second access component 1201 different from the first access component 1101.

In some embodiments, routing the data streams destined for the external node to at least one secondary network device 120-1 among one or more secondary network devices 120 can include routing the data streams to the at least one secondary network device120-1 through at least one VPN tunnel between the primary network device 110 and the at least one secondary network device 120-1.

In some embodiments, each secondary network device 120 can be configured to route data streams from a terminal and destined for the external node to the primary network device 110 through at least one backhaul link established between the primary network device 110 and the secondary network device 120.

In some embodiments, each of the at least one secondary network device can be configured to route data streams from the primary network device to the external node through its second access component.

In some embodiments, routing the data streams to the at least one secondary network device through the at least one VPN tunnel can include: selecting the at least one secondary network device from the one or more secondary network devices based on network characteristics of the one or more secondary network devices (510); assigning the data streams among the at least one secondary network device (520); and routing the data streams to the at least one secondary network device according to the assigning through the at least one VPN tunnel (530).

In some embodiments, selecting the at least one secondary network device from the one or more secondary network devices may be further based on characteristics of the data streams.

In some embodiments, network characteristics of a secondary network device may include at least one of a signal strength, a packet loss, latency and bandwidth of the secondary network device, and wherein characteristics of a data stream may include at least one of a latency sensitivity, a bandwidth requirement and a packet loss rate requirement of the data stream.

Details of steps of method 600 have already been described above in the embodiments of the distributed network system 100 with reference to FIGs. 1-5, and therefore are not repeated herein for conciseness.

According to embodiments of the present disclosure, positions of the secondary network devices can be flexibly adjusted to ensure that the distributed network system operating in the local area network provides a good access quality. In addition, the one or more secondary network devices always route data streams from terminals to the primary network device through the backhaul links. In this way, even if a switching from the primary network device to at least one of the one or more secondary network devices occurs, the user or terminals connected to the primary network device and the one or more secondary network devices will not be affected and thus a "transparent switching" of the network devices can be achieved, so that users will not perceive any interruptions or changes during the switching.

Fig. 7 is an exemplary block diagram illustrating a device 700 according to an embodiment of the present disclosure. It should be noted that the device 700 depicted in Fig. 7 can correspond to the primary network device 110 or any one of the one or more secondary network devices 120 as described above.

As shown in Fig. 7, the device 700 can comprise one or more processors 710 and a memory 720. The one or more processors 710 are communicatively coupled with the memory 720 and configured to perform the actions performed by the primary network device 110 or the secondary network device 120 discussed above.

Examples of the one or more processors 710 comprise microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure.

The one or more processors 710 can execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on memory 720.

The memory 720 may be a non-transitory computer-readable medium. A non-transitory computer-readable medium includes, by way of example, a magnetic storage device (e.g., hard disk, floppy disk, magnetic strip), an optical disk (e.g., a compact disc (CD) or a digital versatile disc (DVD)), a smart card, a flash memory device (e.g., a card, a stick, or a key drive), a random access memory (RAM), a read-only memory (ROM), a programmable ROM (PROM), an erasable PROM (EPROM), an electrically erasable PROM (EEPROM), a register, a removable disk, and any other suitable medium for storing software and/or instructions that may be accessed and read by a computer. The memory 720 may reside in the one or more processors 710, external to the one or more processors 710, or distributed across multiple entities including the one or more processors 710. The memory 720 may be embodied in a computer program product. By way of example, a computer program product may include a computer-readable medium in packaging materials. Those skilled in the art will recognize how to implement the described functionality presented throughout this disclosure depending on the particular application and the overall design constraints imposed on the overall system.

According to another embodiment of the present disclosure, a computer program product for a primary network device operating in a local area network is disclosed. As an example, the computer program product comprises a non-transitory computer readable storage medium having program instructions embodied therewith, and the program instructions are executable by a processor of the primary network device. When executed, the program instructions cause the processor to perform one or more of the described procedures above related to the primary network device, and details are omitted herein for conciseness.

The present disclosure may be a system, a method, and/or a computer program product at any possible technical detail level of integration. The computer program product may include a computer readable storage medium (or media) having computer readable program instructions thereon for causing a processor to carry out aspects of the present disclosure.

Expression such as "according to", "based on", "dependent on", and so on as used in the disclosure does not mean "according only to", "based only on", or "dependent only on", unless it is explicitly otherwise stated. In other words, such expression generally means "according at least to", "based at least on", or "dependent at least on" in the disclosure.

Any reference in the disclosure to an element using the designation "first", "second" and so forth is not intended to comprehensively limit the number or order of such elements. These expressions can be used in the disclosure as a convenient method for distinguishing two or more units. Thus, a reference to a first unit and a second unit does not imply that only two units can be employed or that the first unit must precede the second unit in some form.

The term "determining" used in the disclosure can include various operations. For example, regarding "determining", calculating, computing, processing, deriving, investigating, looking up (e.g., looking up in tables, databases, or other data structure), ascertaining, and so forth are regarded as "determination". In addition, regarding "determining", receiving (for example, receiving information), transmitting (for example, transmitting information), input, output, accessing (for example, access to data in the memory), and so forth, are also regarded as "determining". In addition, regarding "determining", resolving, selecting, choosing, establishing, comparing, and so forth can also be regarded as "determining". That is, regarding "determining", several actions can be regarded as "determining".

The terms such as "connected", "coupled" or any of their variants used in the disclosure refer to any connection or combination, direct or indirect, between two or more units, which can include the following situations: between two units that are "connected" or "coupled" with each other, there are one or more intermediate units. The coupling or connection between the units can be physical or logical, or can also be a combination of the two. As used in the disclosure, two units can be considered to be electrically connected through the use of one or more wires, cables, and/or printed, and as a number of non-limiting and non-exhaustive examples, and are "connected" or "coupled" with each other through the use of electromagnetic energy with wavelengths in a radio frequency region, the microwave region, and/or in the light (both visible and invisible) region, and so forth.

When used in the disclosure or the claims "including", "comprising", and variations thereof, these terms are as open-ended as the term "having". Further, the term "or" used in the disclosure or in the claims is not an exclusive-or.

The present disclosure has been described in detail above, but it is obvious to those skilled in the art that the present disclosure is not limited to the embodiments described in the disclosure. The present disclosure can be implemented as a modified and changed form without departing from the spirit and scope of the present disclosure defined by the description of the claims. Therefore, the description in the disclosure is for illustration and does not have any limiting meaning to the present disclosure.

## Claims

1. A distributed network system operating in a local area network, comprising:
a primary network device connected to an external node through a first access component; and
one or more secondary network devices separated from the primary network device, wherein each secondary network device is connectable to the external node through a second access component different from the first access component,
wherein at least one backhaul link is established between the primary network device and each secondary network device, and
wherein each secondary network device is configured to route data streams from a terminal and destined for the external node to the primary network device through the at least one backhaul link.

2. The distributed network system of claim 1,
wherein the primary network device is configured to:
route data streams destined for the external node to at least one secondary network device among the one or more secondary network devices through at least one virtual private network (VPN) tunnel between the primary network device and the at least one secondary network device, in response to a failure of a connection of the primary network device to the external node through the first access component, and
wherein each of the at least one secondary network device is configured to:
route data streams from the primary network device to the external node through its second access component.

3. The distributed network system of claim 2, wherein routing data streams destined for the external node to at least one secondary network device among the one or more secondary network devices through at least one VPN tunnel between the primary network device and the at least one secondary network device comprises:
selecting the at least one secondary network device from the one or more secondary network devices based on network characteristics of the one or more secondary network devices;
assigning the data streams among the at least one secondary network device; and
routing the data streams to the at least one secondary network device according to the assigning through the at least one VPN tunnel.

4. The distributed network system of claim 3, wherein the network characteristics of a secondary network device comprise at least one of a signal strength, a packet loss, latency and bandwidth of the secondary network device.

5. The distributed network system of claim 3, wherein selecting the at least one secondary network device from the one or more secondary network devices is further based on characteristics of the data streams.

6. The distributed network system of claim 5, wherein characteristics of a data stream comprise at least one of a latency sensitivity, a bandwidth requirement and a packet loss rate requirement of the data stream.

7. The distributed network system of claim 2, wherein a VPN tunnel is established between the primary network device and each secondary network device in response to the failure of the connection of the primary network device to the external node.

8. The distributed network system of claim 2, wherein the at least one secondary network device is configured to:
route data streams from the external node to the primary network device through the at least one VPN channel.

9. The distributed network system of claim 1, wherein the primary network device is configured to route, data streams destined for a terminal connected to a first secondary network device among the one or more secondary network devices, to the first secondary network device through the at least one backhaul link between the primary network device and the first secondary network device.

10. The distributed network system of claim 1, wherein each secondary network device connects to the external node through the second access component in response to determining a failure of a connection of the primary network device to the external node through the first access component.

11. The distributed network system of claim 1, wherein the first access component comprises a wired access component or a wireless access component.

12. The distributed network system of claim 1, wherein the second access component comprises at least one of a cellular network access component, a Wireless Local Area Network (WLAN) access component or a wired access component.

13. The distributed network system of claim 2, wherein a VPN tunnel between the primary network device and each secondary network device is established based on a point to point tunneling protocol (PPTP), a layer 2 tunneling protocol (L2TP), a generic routing encapsulation (GRE) tunneling protocol, a WireGuard protocol or an OpenVPN protocol.

14. A controlling method for a primary network device operating in a local area network, comprising:
routing, data streams destined for an external node, to the external node through a first access component, in response to a success of a connection of the primary network device to the external node through the first access component; and
routing, the data streams destined for the external node, to at least one secondary network device among one or more secondary network devices, in response to a failure of the connection of the primary network device to the external node through the first access component,
wherein the one or more secondary network devices are separated from the primary network device, and each secondary network device is connectable to the external node through a second access component different from the first access component.

15. A computer program product for a primary network device operating in a local area network, the computer program product comprising a non-transitory computer readable storage medium having program instructions embodied therewith, the program instructions executable by a processor of the primary network device to cause the processor to:
route, data streams destined for an external node, to the external node through a first access component, in response to a success of a connection of the primary network device to the external node through the first access component; and
route, the data streams destined for the external node, to at least one secondary network device among one or more secondary network devices through at least one virtual private network (VPN) tunnel between the primary network device and the at least one secondary network device, in response to a failure of the connection of the primary network device to the external node through the first access component,
wherein the one or more secondary network devices are separated from the primary network device, and each secondary network device is connectable to the external node through a second access component different from the first access component.
